# EUROPEAN PATENT APPLICATION

(11) **EP 1 500 637 A1**
(43) Date of publication of application: **26.01.2005**
(21) Application number: 03725688.0
(22) Date of filing: 28.04.2003
(51) Int. Cl.: C04B 38/06, C08L 5/08, C08B 37/08

(54) **POROUS CERAMIC AND METHOD FOR PRODUCTION THEREOF**

(30) Priority: 28.04.2002 JP 2002163633
(71) Applicant: KOIDE, Masafumi, Nagoya-shi, Aichi 468-0051 (JP)
(72) Inventor: KOIDE, Masafumi, Nagoya-shi, Aichi 468-0051 (JP); TSUCHIHIRA, Eiichi, Tokoname-shi, Aichi 479-0825 (JP)
(74) Representative: Lorenz, Eduard
(86) International application number: PCT/JP2003/005425
(87) International publication number: WO 2003/093197

(57) **Abstract**

The method for producing a porous ceramic comprises the slurry preparing step of preparing a slurry containing a powdery aggregate and a hydrated crystalline material having a bum-out feature, the solid matter forming step of decreasing a liquid component from the slurry prepared in the slurry preparing step, thereby forming a solid matter, and the firing step of firing the solid matter formed in the solid matter forming step to bum up the hydrated crystalline material, thereby forming the porous ceramic.

## Description

### Technical Field

The present invention,

The present invention relates to a porous ceramic and a method for producing the same.

### Background Art

About methods for producing a porous ceramic, various contrivances have been made so far.

For example, there is a method for producing a porous ceramic, wherein the diameter of raw material powder is adjusted, thereby generating, in the grain boundary between crystal grains, pores which do not disappear at the time of sintering.

There is also a method for producing a porous ceramic, wherein sintering temperature is made lower than a given temperature when compared with the prior art, thereby causing pores which disappear at conventional sintering temperatures to remain.

Furthermore, there have also been developed a method of preparing a slurry containing ceramic powder and having foaming property, turning it into a whip-form slurry, and molding and firing the slurry; a method of filling a mold with a synthetic resin foamed body, filling pores therein with a slurry containing ceramic powder and having self-hardening ability, heating and hardening the resultant, and firing the obtained molded body; and a method of mixing combustible particles made of carbon, coffee husks or the like with ceramic powder and then firing a molded body therefrom so as to bum up the combustible particles.

In general, however, in the production of a ceramic product, for example, powder having a wide particle diameter distribution, wherein silica rock, feldspar or the like is finely pulverized, is used as starting powder. As clay, a material which has already been fine from the production time thereof and further has a wide particle diameter distribution is used. That is, the scattering in particle diameters of starting materials is very large. It is therefore difficult in methods for producing a porous ceramic in the prior art as described above that the porosity, the pore size, the strength and others of the resultant porous ceramic are minutely adjusted.

Specifically, when an attempt for producing a porous ceramic having desired porosity and pore size is made by the method in which the diameter of staring powder is adjusted, a labor for adjusting the particle diameter of the starting powder is required and further starting powder waste is generated.

When an attempt for producing a porous ceramic having desired porosity and pore size is made by the method in which sintering is conducted at a lower temperature than a given temperature, a high-strength porous ceramic cannot be produced since sufficient sintering is not attained.

It is also difficult to minutely adjust the volume of spaces distributed between starting powders by the method using a whip-form slurry, a synthetic resin foamed body or combustible particles.

### Disclosure of the Invention

An object of the present invention is to provide a method for producing a porous ceramic having a small scattering in pore sizes.

A first method for producing a porous ceramic of the present invention comprises:
the slurry preparing step of preparing a slurry containing a powdery aggregate and a hydrated crystalline material having a bum-out feature,
the solid matter forming step of decreasing a liquid component from the slurry prepared in the slurry preparing step, thereby forming a solid matter, and
the firing step of firing the solid matter formed in the solid matter forming step to bum up the hydrated crystalline material, thereby forming the porous ceramic.

Herein, the hydrated crystalline material means a material which can form a hydrated crystal correspondingly to the temperature, the pressure or some other state of the surrounding atmosphere thereof, or a change embodiment thereof when the material is dispersed in a solvent which contains water.

In the first method for producing the porous ceramic of the present invention, the hydrated crystalline material may be trehalose.

In the first method for producing the porous ceramic of the present invention in this case, a given thermal hysteresis may be given to the slurry so as to set the size of crystal of the trehalose to a given size in the slurry preparing step.

In the first method for producing the porous ceramic of the present invention, in the slurry preparing step a mucopolysaccharide may be incorporated in the slurry.

In the first method for producing the porous ceramic of the present invention in this case, the mucopolysaccharide may be hyaluronic acid

In the first method for producing the porous ceramic of the present invention, in the slurry preparing step a binder for binding powders of the powdery aggregate to each other is incorporated in the slurry.

In the first method for producing the porous ceramic of the present invention in this case, the binder may be at least one selected from sodium silicate, colloidal silica, alumina sol, lithium silicate, glass frit, natural rubber, synthetic rubber, methylcellulose, carboxymethylcellulose, hydroxymethylcellulose, hydroxyethylcellulose, polyvinyl alcohol, polyethylene, phenol resin, polyacrylate, and sodium polyacrylate.

In the first method for producing the porous ceramic of the present invention, in the slurry preparing step at least one selected from the following may be incorporated in the slurry: a fluidizing agent, a dispersing agent, a slurry hardening agent, an organic monomer and a crosslinking agent for the monomer, a plasticizer, an antifoamer, and a surfactant.

In the first method for producing the porous ceramic of the present invention, in the slurry preparing step a bum-out feature material which is different from the hydrated crystalline material may be incorporated in the slurry.

In the first method for producing the porous ceramic of the present invention, in the slurry preparing step the slurry may be cooled from the outside.

In the first method for producing the porous ceramic of the present invention, in the solid matter forming step the humidity of the surrounding atmosphere of the slurry may be lowered.

In the first method for producing the porous ceramic of the present invention, in the solid matter forming step the pressure of the surrounding atmosphere of the slurry may be lowered.

In the first method for producing the porous ceramic of the present invention, in the solid matter forming step the slurry may be spray-dried, thereby forming the solid matter in a powder or granular form.

In the first method for producing the porous ceramic of the present invention, in the solid matter forming step a filter may be used to decrease the liquid component of the slurry, thereby forming the solid matter.

In the first method for producing the porous ceramic of the present invention, in the firing step the solid matter may be oxidization-fired.

In the first method for producing the porous ceramic of the present invention, in the firing step the solid matter may be reduction-fired.

In the first method for producing the porous ceramic of the present invention, in the firing step the pressure of the surrounding atmosphere of the solid matter may be changed while the temperature thereof is kept constant.

In the first method for producing the porous ceramic of the present invention, in the firing step the temperature of the surrounding atmosphere of the solid matter may be changed while the pressure thereof is kept constant.

According to the first porous ceramic producing method of the present invention, there can be obtained a porous ceramic produced by firing a solid matter formed by decreasing a liquid component from a slurry containing a powdery aggregate and a hydrated crystalline material having a bum-out feature so as to bum up the bum-out feature material.

In the above-mentioned porous ceramic, the hydrated crystalline material may be trehalose.

The above-mentioned porous ceramic may carry at least one selected from an electrifiable material, a material having an ion exchange group, a material having a hydrophilic functional group, a material having a hydrophobic functional group, a catalyst, an enzyme, a protein, a saccharide, a lipid, and a nucleic acid; a modified product of any one thereof, a composite of plural materials selected therefrom; and other ceramic materials, and glass.

In the above-mentioned porous ceramic, a surface-covering layer may be formed.

In the above-mentioned porous ceramic, the surface thereof may be subjected to chemical and/or physical surface treatment.

In the above-mentioned porous ceramic, the pore density of an outer portion may be higher than that of an inner portion.

A second method for producing a porous ceramic of the present invention comprises:
the slurry preparing step of preparing a slurry containing a powdery aggregate, a bum-out feature material, and a mucopolysaccharide,
the solid matter forming step of decreasing a liquid component from the slurry. prepared in the slurry preparing step, thereby forming a solid matter, and
the firing step of firing the solid matter formed in the solid matter forming step to burn up the burn-out feature material, thereby forming the porous ceramic.

In the second method for producing the porous ceramic of the present invention, the mucopolysaccharide may be hyaluronic acid.

In the second method for producing the porous ceramic of the present invention, in the slurry preparing step aggrecan may be incorporated in the slurry.

In the second method for producing the porous ceramic of the present invention, in the slurry preparing step a binder for binding powders of the powdery aggregate to each other may be incorporated in the slurry.

In the second method for producing the porous ceramic of the present invention, the binder may be at least one selected from sodium silicate, colloidal silica, alumina sol, lithium silicate, glass frit, natural rubber, synthetic rubber, methylcellulose, carboxymethylcellulose, hydroxymethylcellulose, hydroxyethylcellulose, polyvinyl alcohol, polyethylene, phenol resin, polyacrylate, and sodium polyacrylate.

In the second method for producing the porous ceramic of the present invention, in the slurry preparing step at least one selected from the following may be incorporated in the slurry: a fluidizing agent, a dispersing agent, a slurry hardening agent, an organic monomer and a crosslinking agent for the monomer, a plasticizer, an antifoamer, and a surfactant.

In the second method for producing the porous ceramic of the present invention, in the solid matter forming step the humidity of the surrounding atmosphere of the slurry may be lowered.

In the second method for producing the porous ceramic of the present invention, in the solid matter forming step the pressure of the surrounding atmosphere of the slurry may be lowered.

In the second method for producing the porous ceramic of the present invention, in the solid matter forming step the slurry may be spray-dried, thereby forming the solid matter in a powder or granular form.

In the second method for producing the porous ceramic of the present invention, in the solid matter forming step a filter may be used to decrease the liquid component of the slurry, thereby forming the solid matter.

In the second method for producing the porous ceramic of the present invention, in the firing step the solid matter may be oxidization-fired.

In the second method for producing the porous ceramic of the present invention, in the firing step the solid matter may be reduction-fired.

In the second method for producing the porous ceramic of the present invention, in the firing step the pressure of the surrounding atmosphere of the solid matter may be changed while the temperature thereof is kept constant.

In the second method for producing the porous ceramic of the present invention, in the firing step the temperature of the surrounding atmosphere of the solid matter may be changed while the pressure thereof is kept constant.

According to the second porous ceramic producing method of the present invention, there can be obtained a porous ceramic produced by firing a solid matter formed by decreasing a liquid component from a slurry containing a powdery aggregate, a bum-out feature material, and a mucopolysaccharide so as to bum up the bum-out feature material.

In the above-mentioned porous ceramic, the mucopolysaccharide may be hyaluronic acid.

The above-mentioned porous ceramic may carry at least one selected from an electrifiable material, a material having an ion exchange group, a material having a hydrophilic functional group, a material having a hydrophobic functional group, a catalyst, an enzyme, a protein, a saccharide, a lipid, and a nucleic acid; a modified product of any one thereof, a composite of plural materials selected therefrom; and other ceramic materials, and glass.

In the above-mentioned porous ceramic, a surface-covering layer may be formed.

In the above-mentioned porous ceramic, the surface thereof may be subjected to chemical and/or physical surface treatment.

### Brief Description of the Drawings

Fig. 1 is a view showing the structural formula of trehalose.
Fig. 2 is a view showing the structural formula of hyaluronic acid.
Fig. 3 is a view showing a sectional form of a porous ceramic.

### Best Modes for Carrying Out the Invention

Methods for producing a porous ceramic according to embodiments of the present invention are described hereinafter.

### (Embodiment 1)

In the method for producing a porous ceramic according to Embodiment 1 of the present invention, first, in a slurry preparing step, a slurry containing a powder aggregate and a hydrated crystalline material having a bum-out feature is prepared.

Next, in a solid matter forming step, a liquid component is decreased from the slurry prepared in the slurry preparing step, thereby forming a solid matter. The solid matter obtained at this time is a matter wherein the hydrated crystalline material is dispersed in the matrix of the powder aggregate.

In a firing step, the solid matter is fired. At this time, the hydrated crystalline material is burned up to form a porous ceramic.

The powdery aggregate constitutes the skeleton of the porous ceramic. Examples of the powdery aggregate include pottery, porcelain material, alumina, forsterite, cordierite, zeolite, hydrotalcite, montomorillonite, sepiolite, zirconia, silicon nitride, silicon carbide, calcium phosphate, hydroxyapatite. Additionally, glass fiber, rock wool, almunosilicate fiber and alumina fiber, which are heat-resistant fibers, are exemplified. The means for adjusting the particle diameter of the powdery aggregate may be a method using a ball mill. Examples of the shaping method for it include mold-press, cold isostatic press, cast molding, injection molding, extrusion molding, doctor blade methods, and the like.

The hydrated crystalline material has burning-up property, and is dispersed and contained in the solid matter obtained by removing water content from the slurry and is burned up by firing, so as to form pores in the porous ceramic. The hydrated crystalline material has a very small scattering in sizes of particles thereof when the material is incorporated in the slurry. For this reason, the resultant porous ceramic has a very small scattering in pore sizes. The hydrated crystalline material is, for example, trehalose.

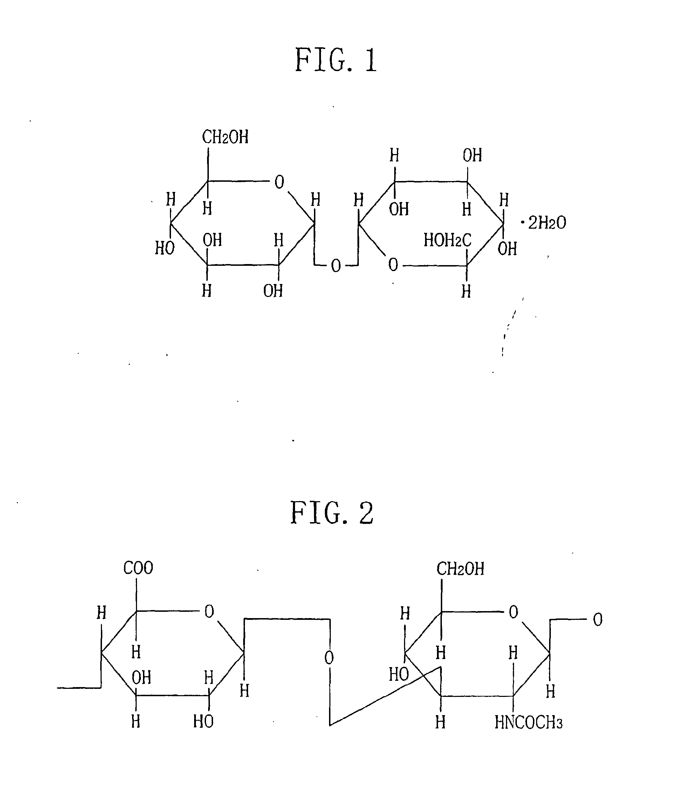

Fig. 1 is a view showing the structural formula of trehalose.

Trehalose is a non-reducing disaccharide having a molecular weight of 342.30 wherein two molecules of D-glucose are 1,1-bonded to each other. When trehalose is dissolved in water, it turns into an aqueous solution in a supersaturated state by a rise in the temperature of the water. By a fall in the temperature, it turns into hydrated crystal originating from crystal nuclei. In addition, the trehalose hydrated crystal is dissolved at 80 to 90°C. At 100°C or higher, water content is evaporated and scattered therefrom so that anhydration starts. Trehalose converted to anhydrous crystal with the rise in the temperature thereof carbonizes at about 600°C. When the temperature is further raised up in an oxidization atmosphere, trehalose is burned at about 800 to 900°C to turn to CO₂. On the other hand, the powdery aggregate has not yet been sintered in this step, and the fluidity of spaces between powders of the powdery aggregate is kept. Therefore, the porous structure of the pores ceramic can be adjusted into various forms. Trehalose is contained in mushrooms in many cases. The reason why a dried shiitake mushroom is completely restored into an original form when it is immersed into water is that trehalose contained in the shiitake mushroom forms hydrated crystal or trehalose attracts surrounding water molecules intensely so as to turn into a stable state. The fact that confectionery has a function of keeping freshness is also because the confectionery contains trehalose.

When trehalose is incorporated in the slurry, trehalose is dissolved up to a supersaturated state wherein the ratio of the weight of trehalose to that of hot water (W/W) is three or more. With a fall in the temperature thereof, crystal is formed from starting points of crystal nuclei in the slurry. As the trehalose content in the slurry is larger, the mass of bi-hydrated crystal of trehalose which enters the solid matter at the time of removing water content in the solid matter forming step is larger. Accordingly, the porosity of the resultant porous ceramic can be adjusted by controlling the amount of dissolved trehalose.

When the temperature of the slurry is gently and gradually lowered, large crystals of trehalose are formed. On the other hand, when the temperature of the slurry is rapidly lowered, a great number of small crystals are formed. Therefore, a given therma hysteresis is given to the slurry, whereby the crystal growth of trehalose is adjusted to vary the diameter of the crystals. As a result, the pore size of the resultant pore ceramic can be adjusted.

As described above, when trehalose is used as the hydrated crystalline material, hydrated trehalose crystals which are homogenous and have desired sizes can be realized in the slurry. Consequently, a porous ceramic having a pore structure corresponding to it can be obtained.

A mucopolysaccharide may be incorporated in the slurry. A mucopolysaccharide is the generic name of any polysaccharide which contains an amino sugar and uronic acid. A mucopolysaccharide absorbs water content in the slurry to remove the water content, and promotes crystallization of soluble components dissolved in the slurry. Examples of the mucopolysaccharide include hyaluronic acid, chondroitin sulfate, heparin, keratan sulfate, and the like. Among these, hyaluronic acid, which is excellent in water absorbing performance, is preferable.

Fig. 2 is a view showing the structural formula of hyaluronic acid.

Hyaluronic acid is a macromolecular mucopolysaccharide having, as a minimum recurring unit, a disaccharide of glucuronic acid and N-acetyl-D-glucosamine. Hyaluronic acid has a property of attracting a great amount of water and attracts water content in a volume 6000 times the weight thereof. Therefore, only by incorporating a very small volume of hyaluronic acid in the slurry, hyaluronic acid absorbs most all of water content in the slurry in a liquid form, so that the slurry is stabilized. That is, by the fixation of excessive water content, the fluidity of the slurry which is close to the critical point of sol-gel is reduced at a stretch to result in gelatinization.

A binder for bonding powders of the powdery aggregate to each other may be incorporated in the slurry. In the case that the volume of the bum-out feature component distributed between the powdery aggregate powders is large, the bonds between the powdery aggregate powders are liable to become brittle. However, the binder causes pore spaces between the powdery aggregate powders to be kept while the binder makes strong mutual bonds between them. Examples of the binder include sodium silicate, colloidal silica, alumina sol, lithium silicate, glass frit, gua gum (natural rubber, or synthetic rubber), methylcellulose, carboxymethylcellulose, hydroxymethylcellulose, hydroxyethylcellulose, polyvinyl alcohol, polyethylene, phenol resin, polyacrylate, and sodium polyacrylate. Any one of these or two or more thereof may be incorporated as the binder(s) in slurry.

At least one selected from the following may be incorporated in the slurry: a fluidizing agent such as sodium silicate, a dispersing agent such as polycarboxylic acid, a slurry hardening agent of amine type or the like, an organic monomer and a crosslinking agent for the monomer, a plasticizer, an antifoamer, and a surfactant such as sugar ester or polygly ester. When such an additive is incorporated in the slurry, properties of the slurry or the solid matter change. Properties of the resultant porous ceramic, such as the strength thereof and the forming manner of the pores, are affected and changed accordingly. For example, when a surfactant is incorporated in the slurry, the state that water is blended with the powdery aggregate is made more homogeneous so that the homogeneity of the resultant pore ceramic becomes high. Consequently, by incorporating a given additive in the slurry dependently on purpose, a desired porous ceramic can be obtained.

A bum-out feature material which is different from the hydrated crystalline material may be incorporated in the slurry. By incorporating the bum-out feature material which is different form the hydrated crystalline material in the slurry, a porous ceramic wherein plural kinds pores having pore sizes different from each other are intermixed can be obtained. For example, in a porous ceramic obtained from a slurry prepared by incorporating coffee husks into a powdery aggregate made of cordierite in an amount of 10 mass% thereof and then dissolving the resultant into a aqueous saturated trehalose solution at the temperature of which is adjusted to 40°C, small pores based on trehalose and large pores based on the coffee husks are intermixed. The porous ceramic having the pores with the large and small pore sizes is suitable for a filter having high permeability and a bone scaffold having good biocompatibility. Examples of the bum-out feature material which is different from the hydrated crystalline material include graphite, wheat flour, starch, phenol resin, polymethyl methacrylate resin, polyethylene resin, polyethylene terephthalate resin, and the like. Any one of these or two or more thereof may be incorporated as the burn-out feature material(s) in the slurry.

Besides, an appropriate amount of one or more of the following organic compounds may be incorporated in the slurry: other sugars and amino acids, such as glucose, maltose, isomerized sugars, sucrose, honey, maple sugar, palatinose, sorbitol, xylitol, lactitol, maltitol, dihydrochalcone, stevioside, α-glycosylstevioside, rakanka sweet taste material, glycyrrhizin, L-aspartyl-L-phenylalanine methyl ester, sucralose, Acesulfame K, saccharin, glycine, alanine, dextrin, starch, and lactose.

In the slurry preparing step, the slurry may be cooled from the outside. In this case, the temperature of the slurry falls from the outside to the inside successively, and in the outer portion crystal of the hydrated crystalline material is formed in a larger amount from the aggregate particles as nuclei. Accordingly, in the porous ceramic obtained by firing this as a solid matter, the pore density thereof is higher in a portion closer to the surface, that is, in an outer portion rather than in the inside thereof.

In the solid matter forming step, water content is removed from the slurry by such means as hot wind drying, freeze-drying, super critical drying, or spray drying. By lowering the humidity of the surrounding atmosphere of the slurry, the evaporation of the water content from the slurry may be promoted. Furthermore, by lowering the pressure of the surrounding atmosphere of the slurry, the evaporation of the water content from the slurry may be promoted.

In the solid matter forming step, a powdery or granular solid matter may be formed by spray-drying the slurry in a spray drying machine (spray dryer). Specifically, the slurry is blown out from nozzles to a drying chamber in a heated state, so as to prepare liquid droplets in a fine particle form, and the liquid droplets are brought into contact with hot wind and dried, thereby yielding a powdery or granular solid matter. The spray drying machine is classified into a disc atomizer, a two-fluid nozzle, a four-fluid nozzle, or other types, dependently on difference in its pulverizing device. An appropriate type is selected in accordance with physical properties of the slurry. The powdery or granular solid matter is press-molded and subsequently the molded product is fired as it is to give a porous ceramic.

A filter may be used to decrease the liquid component of the slurry, thereby forming a solid matter. Selection of the type of the filter make it possible to adjust physical properties of the surface of the porous ceramic, or surface forms thereof such as smoothness and flatness; adjust the evaporating and scattering property of the slurry when the slurry is solidified; selectively discharge out components which permeate the inside of the solid matter; advance crystallization of the hydrated crystalline material from the outside of the solid matter, and the like. In the case that the solid matter adheres to the filter so that the matter is not easily striped, it is advisable that a releasing agent, such as silicone, is beforehand applied to the filter.

In the firing step, the solid matter is fired by a known method such as normal-pressure firing, pressured-gas firing, or microwave-heating firing. Thereafter, it is sintered by a sintering method such as hot isostatic press treatment, or glass seal posttreatment. Furthermore, the resultant is subjected to some other heating treatment. At this time, it is preferable to heat the fired solid matter up to high temperature so as to cause the porous ceramic to exhibit a sufficient strength.

In the firing step, the solid matter may be oxidization-fired. In this case, a porous ceramic having a high porosity so as to exhibit a low density can be obtained.

In the firing step, the solid matter may be reduction-fired by reducing the pressure of the gas around the solid matter to remove the gas, or substituting the surrounding gas with a nitrogen gas and/or a carbon dioxide gas. In this case, a porous ceramic having properties different from those in the case of the oxidization firing can be obtained.

In the firing step, the pressure of the surrounding atmosphere of the solid matter may be changed while the temperature thereof is kept constant. Conversely, the temperature of the surrounding atmosphere of the solid matter may be changed while the pressure thereof is kept constant.

In a manner that these matters are combined in the firing step, properties of the resultant porous ceramic can be adjusted. Specifically, for example, at 80 to 100°C, the fluidization and discharge of the water content can be adjusted by controlling the humidity, the pressure and temperature of the surrounding of the solid matter. At 100 to 300°C, the distribution and the size of the pores can be changed by adjusting the temperature and the pressure. At 600°C or temperatures near it, the sintered state can be decided by selecting oxidization firing or reduction firing. At 900 to 1000°C, the burning temperature can be abruptly raised by introducing oxygen into reduction atmosphere.

Besides, in an additional step, a surface-covering layer may be formed on the surface of the porous ceramic.

The porous ceramic surface may also be subjected to chemical and/or physical surface treatment. For example, the porous ceramic is subjected to physical surface treatment to reform surface properties, such as absorption, scattering and reflection of light, sounds or electric waves.

The porous ceramic of the present invention produced as described above can be applied to various purposes since the ceramic has a wide surface area.

By the use of an aggregate having functionality as the powdery aggregate of the porous ceramic, the ceramic itself can be used as a functional material.

The porous ceramic formed from a slurry which contains, as powdery aggregates, zeolite, which exhibits the property of absorbing cations, and hydrotalcite, which has anion exchangeability, and also contains trehalose exhibits a performance as an excellent molecule-selective sieve or adsorbent.

The porous ceramic can be used as a functional material by causing the porous ceramic to carry at least one selected from an electrifiable material, a material having an ion exchange group, a material having a hydrophilic functional group, a material having a hydrophobic functional group, a catalyst, an enzyme, an antibody, a protein, a saccharide, a lipid, and a nucleic acid; a modified product of any one thereof, a composite of plural materials selected therefrom; and other ceramic materials, and glass.

For example, a photo catalyst wherein the porous ceramic formed from a slurry containing trehalose is caused to carry lamellar titanic acid can also be applied to organic solar cells since the photo catalyst has a very high reaction efficiency.

The porous ceramic can be used as a filter for capturing biomolecules of protein, nucleic acid or the like or letting the biomolecules pass.

For example, a molecular weight marker is fractionated in accordance with the molecular weight thereof by electrophoresis in a polyacrylamide gel, and the gel is immersed into a tris buffer (SDS, 10% methanol) and transferred electrically to the porous ceramic made of cordierite. When electric conduction load is then applied thereto for 1 hour or more, molecules which are smaller than myosin (molecular weight: 210 KD) penetrate the membrane of the porous ceramic. On the other hand, myosin remains on the porous ceramic membrane. That is, the porous ceramic functions as a molecule filter for causing molecules having a molecular weight of 200 KD or less to pass but capturing molecules having a molecular weight of 200 KD or more. In particular, the porous ceramic formed from a slurry containing glass material as a powdery aggregate and trehalose is useful for separating DNA, RNA or the like from impurities since the ceramic exhibits performance for adsorbing nucleic acid into a porous space or releasing nucleic acid therefrom in accordance with ion strength.

The porous ceramic can be used as a water-cleaning filter, an exhaust gas filter, or a filter for separating gas and liquid from each other since the porous ceramic allows a liquid or gas of a molecule which is smaller than the pores to pass freely.

The porous ceramic can be used as a space for holding gas or liquid stably.

For example, when the porous ceramic (spray dry, an alumina fired product) dried and kept in the air is immersed in water, the ceramic exhibits a performance for releasing gas gently and slowly over 1 hour or more. This performance is effective for keeping hydrogen in a fuel battery, and the like. On the other hand, after the ceramic is immersed in the aqueous solution, the ceramic exhibits a performance for keeping a larger mass than the dry weight in an ambient temperature space over 24 hours or more while containing the aqueous solution.

The surface of the porous ceramic can be used as a field for molecule-bonding reaction between biotin and streptavidin, or between other compounds.

### <Experimental Example>

The porous ceramic of the present invention was produced in accordance with the following manner.

First, an aqueous supersaturated solution of trehalose (manufactured by Hayashibara Shoji, Inc., trade name: Toreha) at 40°C was prepared, and thereto were added a commercially available dry porcelain material, which is a powdery aggregate, and sodium silicate, which is a fluidization agent. The resultant was mixed with an electrically-powered mixer to form a slurry.

Next, a non-fluidized portion remaining in the bottom of the mixing vessel was removed, and subsequently to the mixture were added 1/100 mass% of gua gum (manufactured by Sansho Co., Ltd.) as a binder and antifoamers (manufactured by Nopco Limited, trade name: Nopco 8034-L and SN Defoamer 777). The resultant was further mixed to prepare an elastic slurry.

Next, to this was added a small amount (about 1/10000 mass%) of hyaluronic acid (manufactured by Kibun Chemifa Co., Ltd.) originating from bacteria, and subsequently the resultant was mixed by means of the electrically-powered blender. In this way, excessive water content was absorbed by hyaluronic acid, to form an elasticity-strengthened slurry.

Next, this elasticity-strengthened slurry was developed onto a nonwoven fabric surface-treated with a releasing agent to produce a plate-form molded product. Furthermore, thereon was adhered a nonwoven fabric surface-treated with a releasing agent.

Subsequently, the plate-form molded product sandwiched between the nonwoven fabrics was kept at room temperature for 72 hours to remove water content. In this way, a solid matter was formed.

This solid matter was sintered at 700 to 1350°C in an oxidizing environment, so as to yield a porous ceramic. At this time, excessive water content, trehalose hydrated crystal and other additives in the solid matter were evaporated, scattered and burned up so that burned-up portions of the trehalose hydrated crystal, and so on became pores.

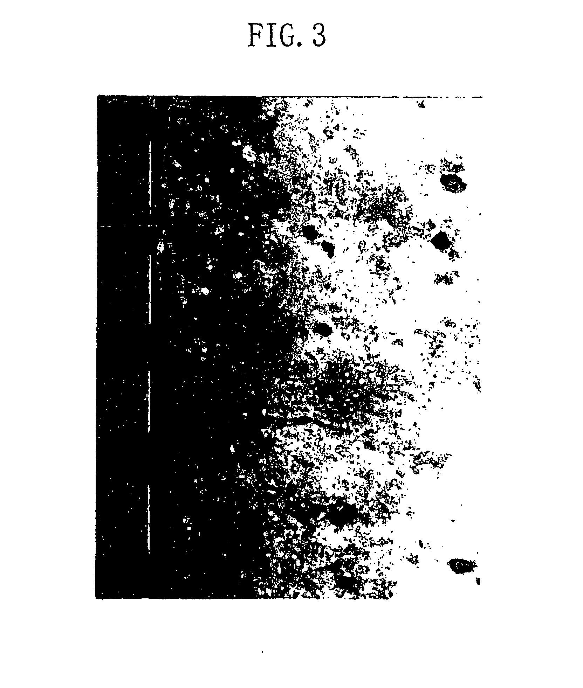

Fig. 3 shows a sectional form of the produced porous ceramic.

The porous ceramic produced as described above was a ceramic produced using the commercially available powdery aggregate having a wide particle size distribution, but a scattering in pore sizes was very small. Moreover, the ceramic exhibited functions of dispersing and attracting solutions and colorant molecules (trypan blue) by a strong capillary phenomenon. Thus, the ceramic was suitable for various molecular sieves.

When the amount of the dissolved trehalose, the temperature of the slurry, and so on were controlled to adjust the amount or the size of the trehalose hydrated crystal, porous ceramics having a desired porosity or pore size were able to be obtained.

When alumina, forsterite, barium titanate, zeolite or the like was used as a powdery aggregate, a porous ceramic having a very small scattering in pore sizes was able to be obtained in the same way as described above.

### (Embodiment 2)

In the method for producing a porous ceramic according to Embodiment 2 of the present invention, first, in a slurry preparing step, a slurry containing a powdery aggregate, a burn-out feature material, and a mucopolysaccharide was prepared.

Next, in a solid matter forming step, a liquid component is decreased from the slurry prepared in the slurry preparing step, thereby forming a solid matter. The solid matter obtained at this time is a matter wherein the bum-out feature material is dispersed in the matrix of the powder aggregate.

In a firing step, the solid matter is fired. At this time, the bum-out feature material is burned up to form a porous ceramic.

The powdery aggregate constitutes the skeleton of the porous ceramic. Examples of the powdery aggregate include pottery, porcelain material, alumina, forsterite,, cordierite, zeolite, hydrotalcite, montomorillonite, sepiolite, zirconia, silicon nitride, silicon carbide, calcium phosphate, hydroxyapatite. Additionally, glass fiber, rock wool almunosilicate fiber and alumina fiber, which are heat-resistant fibers, are exemplified. The means for adjusting the particle diameter of the powdery aggregate may be a method using a ball mill. Examples of the shaping method for it include mold-press, cold isostatic press, cast molding, injection molding, extrusion molding, doctor blade methods, and the like.

The bum-out feature material is dispersed and contained in the solid matter obtained by removing water content from the slurry and is burned up by firing, so as to form pores in the porous ceramic. Examples of the burn-out feature material include graphite, wheat flour, starch, phenol resin, polymethyl methacrylate resin, polyethylene resin, and polyethylene terephthalate resin, and the like. Any one of these or two or more thereof may be incorporated as the bum-out feature material(s) in the slurry.

A mucopolysaccharide is the generic name of any polysaccharide which contains an amino sugar and uronic acid. A mucopolysaccharide absorbs water content in the slurry to remove the water content, and promotes crystallization of soluble components dissolved in the slurry. By incorporating a mucopolysaccharide in the slurry, a porous ceramic having a very small scattering in pore sizes can be obtained in the same way as in the case of Embodiment 1. The mechanism thereof is unclear. Examples of the mucopolysaccharide include hyaluronic acid, chondroitin sulfate, heparin, and keratan sulfate. Furthermore, pectin, carrageenan, or the like may be used as an uronic acid analogue. Among these, hyaluronic acid, which is excellent in water absorbing performance, is preferable.

Fig. 2 is a view showing the structural formula of hyaluronic acid.

Hyaluronic acid is a macromolecular mucopolysaccharide having, as a minimum recurring unit, a disaccharide of glucuronic acid and N-acetyl-D-glucosamine. Hyaluronic acid has a property of attracting a great amount of water and attracts water content in a volume 6000 times the weight thereof. Therefore, only by incorporating a very small volume of hyaluronic acid in the slurry, hyaluronic acid absorbs most all of water content in the slurry in a liquid form, so that the slurry is stabilized. That is, by the fixation of excessive water content, the fluidity of the slurry which is close to the critical point of sol-gel is reduced at a stretch to result in gelatinization.

In the case that the mucopolysaccharide is, for example, hyaluronic acid, aggrecan, which is bonded to hyaluronic acid to form a giant complex, may be incorporated in the slurry. Aggrecan is keratan sulfate/chondroitin sulfate proteoglycan having a molecular weight of about 2500 KD.

A binder for bonding powders of the powdery aggregate to each other may be incorporated in the slurry. In the case that the volume of the burn-out feature component distributed between the powdery aggregate powders is large, the bonds between the powdery aggregate powders are liable to become brittle. However, the binder causes pore spaces between the powdery aggregate powders to be kept while the binder makes strong mutual bonds between them. Examples of the binder include sodium silicate, colloidal silica, alumina sol, lithium silicate, glass frit, gua gum (natural rubber, or synthetic rubber), methylcellulose, carboxymethylcellulose, hydroxymethylcellulose, hydroxyethylcellulose, polyvinyl alcohol, polyethylene, phenol resin, polyacrylate, and sodium polyacrylate. Any one of these or two or more thereof may be incorporated as the binder(s) in slurry.

At least one selected from the following may be incorporated in the slurry: a fluidizing agent such as sodium silicate, a dispersing agent such as polycarboxylic acid, a slurry hardening agent of amine type or the like, an organic monomer and a crosslinking agent for the monomer, a plasticizer, an antifoamer, and a surfactant such as sugar ester or polygly ester. When such an additive is incorporated in the slurry, properties of the slurry or the solid matter change. Properties of the resultant pore ceramic, such as the strength thereof and the forming manner of the pores, are affected and changed accordingly. For example, when a surfactant is incorporated in the slurry, the state that water is blended with the powdery aggregate is made more homogeneous so that the homogeneity of the resultant pore ceramic becomes high. Consequently, by incorporating a given additive in the slurry dependently on purpose, a desired porous ceramic can be obtained.

Besides, an appropriate amount of one or more of the following organic compounds may be incorporated in the slurry: other sugars and amino acids, such as glucose, maltose, isomerized sugars, sucrose, honey, maple sugar, palatinose, sorbitol, xylitol, lactitol, maltitol, dihydrochalcone, stevioside, α-glycosylstevioside, rakanka sweet taste material, glycyrrhizin, L-aspartyl-L-phenylalanine methyl ester, sucralose, Acesulfame K, saccharin, glycine, alanine, dextrin, starch, and lactose.

In the solid matter forming step, water content is removed from the slurry by such means as hot wind drying, freeze-drying, super critical drying, or spray drying. By lowering the humidity of the surrounding atmosphere of the slurry, the evaporation of the water content from the slurry may be promoted. Furthermore, by lowering the pressure of the surrounding atmosphere of the slurry, the evaporation of the water content from the slurry may be promoted.

In the solid matter forming step, a powdery or granular solid matter may be formed by spray-drying the slurry in a spray drying machine (spray dryer). Specifically, the slurry is blown out from nozzles to a drying chamber in a heated state, so as to prepare liquid droplets in a fine particle form, and the liquid droplets are brought into contact with hot wind and dried, thereby yielding a powdery or granular solid matter. The spray drying machine is classified into a disc atomizer, a two-fluid nozzle, a four-fluid nozzle, or other types, dependently on difference in its pulverizing device. An appropriate type is selected in accordance with physical properties of the slurry. The powdery or granular solid matter is press-molded and subsequently the molded product is fired as it is to give a porous ceramic.

A filter may be used to decrease the liquid component of the slurry, thereby forming a solid matter. Selection of the type of the filter make it possible to adjust physical properties of the surface of the porous ceramic, or surface forms thereof such as smoothness and flatness; adjust the evaporating and scattering property of the slurry when the slurry is solidified; selectively discharge out components which permeate the inside of the solid matter; advance crystallization of the hydrated crystalline material from the outside of the solid matter, and the like. In the case that the solid matter adheres to the filter so that the matter is not easily striped, it is advisable that a releasing agent, such as silicone, is beforehand applied to the filter.

In the firing step, the solid matter is fired by a known method such as normal-pressure firing, pressured-gas firing, or microwave-heating firing. Thereafter, it is sintered by a sintering method such as hot isostatic press treatment, or glass seal posttreatment. Furthermore, the resultant is subjected to some other heating treatment. At this time, it is preferable to heat the fired solid matter up to high temperature so as to cause the porous ceramic to exhibit a sufficient strength.

In the firing step, the solid matter may be oxidization-fired. In this case, a porous ceramic having a high porosity so as to exhibit a low density can be obtained.

In the firing step, the solid matter may be reduction-fired by reducing the pressure of the gas around the solid matter to remove the gas, or substituting the surrounding gas with a nitrogen gas and/or a carbon dioxide gas. In this case, a porous ceramic having properties different from those in the case of the oxidization firing can be obtained.

In the firing step, the pressure of the surrounding atmosphere of the solid matter may be changed while the temperature thereof is kept constant. Conversely, the temperature of the surrounding atmosphere of the solid matter may be changed while the pressure thereof is kept constant.

In a manner that these matters are combined in the firing step, properties of the resultant porous ceramic can be adjusted. Specifically, for example, at 80 to 100°C, the fluidization and discharge of the water content can be adjusted by controlling the humidity, the pressure and temperature of the surrounding of the solid matter. At 100 to 300°C, the distribution and the size of the pores can be changed by adjusting the temperature and the pressure. At 600°C or temperatures near it, the sintered state can be decided by selecting oxidization firing or reduction firing. At 900 to 1000°C, the burning temperature can be abruptly raised by introducing oxygen into reduction atmosphere.

Besides, in an additional step, a surface-covering layer may be formed on the surface of the porous ceramic.

The porous ceramic surface may also be subjected to chemical and/or physical surface treatment. For example, the porous ceramic is subjected to physical surface treatment to reform surface properties, such as absorption, scattering and reflection of light, sounds or electric waves.

The porous ceramic of the present invention produced as described above can be applied to various purposes in the same way as in Embodiment 1 since the ceramic has a wide surface area.

### Industrial Applicability

The porous ceramic of the present invention and the method for producing the same contribute largely to technique improvement in various fields of nanotechnology, biotechnology, medical science and medical treatment, and environment preservation.

## Claims

1. A method for producing a porous ceramic, comprising:
the slurry preparing step of preparing a slurry containing a powdery aggregate and a hydrated crystalline material having a bum-out feature,
the solid matter forming step of decreasing a liquid component from the slurry prepared in the slurry preparing step, thereby forming a solid matter, and
the firing step of firing the solid matter formed in the solid matter forming step to bum up the hydrated crystalline material, thereby forming the porous ceramic.

2. The method for producing the porous ceramic of claim 1, wherein the hydrated crystalline material is trehalose.

3. The method for producing the porous ceramic of claim 2, wherein in the slurry preparing step, a given thermal hysteresis is given to the slurry so as to set the size of crystal of the trehalose to a given size.

4. The method for producing the porous ceramic of claim 1, wherein in the slurry preparing step, a mucopolysaccharide is incorporated in the slurry.

5. The method for producing the porous ceramic of claim 4, wherein the mucopolysaccharide is hyaluronic acid.

6. The method for producing the porous ceramic of claim 1, wherein in the slurry preparing step, a binder for binding powders of the powdery aggregate to each other is incorporated in the slurry.

7. The method for producing the porous ceramic of claim 6, wherein the binder is at least one selected from sodium silicate, colloidal silica, alumina sol, lithium silicate, glass frit, natural rubber, synthetic rubber, methylcellulose, carboxymethylcellulose, hydroxymethylcellulose, hydroxyethylcellulose, polyvinyl alcohol, polyethylene, phenol resin, polyacrylate, and sodium polyacrylate.

8. The method for producing the porous ceramic of claim 1, wherein in the slurry preparing step, at least one selected from the following is incorporated in the slurry: a fluidizing agent, a dispersing agent, a slurry hardening agent, an organic monomer and a crosslinking agent for the monomer, a plasticizer, an antifoamer, and a surfactant.

9. The method for producing the porous ceramic of claim 1, wherein in the slurry preparing step, a bum-out feature material which is different from the hydrated crystalline material is incorporated in the slurry.

10. The method for producing the porous ceramic of claim 1, wherein in the slurry preparing step, the slurry is cooled from the outside.

11. The method for producing the porous ceramic of claim 1, wherein in the solid matter forming step, the humidity of the surrounding atmosphere of the slurry is lowered.

12. The method for producing the porous ceramic of claim 1, wherein in the solid matter forming step, the pressure of the surrounding atmosphere of the slurry is lowered.

13. The method for producing the porous ceramic of claim 1, wherein in the solid matter forming step, the slurry is spray-dried, thereby forming the solid matter in a powder or granular form.

14. The method for producing the porous ceramic of claim 1, wherein in the solid matter forming step, a filter is used to decrease the liquid component of the slurry, thereby forming the solid matter.

15. The method for producing the porous ceramic of claim 1, wherein in the firing step, the solid matter is oxidization-fired.

16. The method for producing the porous ceramic of claim 1, wherein in the firing step, the solid matter is reduction-fired.

17. The method for producing the porous ceramic of claim 1, wherein in the firing step, the pressure of the surrounding atmosphere of the solid matter is changed while the temperature thereof is kept constant.

18. The method for producing the porous ceramic of claim 1, wherein in the firing step, the temperature of the surrounding atmosphere of the solid matter is changed while the pressure thereof is kept constant.

19. A porous ceramic produced by firing a solid matter formed by decreasing a liquid component from a slurry containing a powdery aggregate and a hydrated crystalline material having a bum-out feature so as to bum up the hydrated crystalline material.

20. The porous ceramic of claim 19,
wherein the hydrated crystalline material is trehalose.

21. The porous ceramic of claim 19, which carries at least one selected from an electrifiable material, a material having an ion exchange group, a material having a hydrophilic functional group, a material having a hydrophobic functional group, a catalyst, an enzyme, a protein, a saccharide, a lipid, and a nucleic acid; a modified product of any one thereof, a composite of plural materials selected therefrom; and other ceramic materials, and glass.

22. The porous ceramic of claim 19, wherein a surface-covering layer is formed.

23. The porous ceramic of claim 19, wherein the surface thereof is subjected to chemical and/or physical surface treatment.

24. The porous ceramic of claim 19, wherein the pore density of an outer portion is higher than that of an inner portion.

25. A method for producing a porous ceramic, comprising:
the slurry preparing step of preparing a slurry containing a powdery aggregate, a bum-out feature material, and a mucopolysaccharide,
the solid matter forming step of decreasing a liquid component from the slurry prepared in the slurry preparing step, thereby forming a solid matter, and
the firing step of firing the solid matter formed in the solid matter forming step to bum up the burn-out feature material, thereby forming the porous ceramic.

26. The method for producing the porous ceramic of claim 25, wherein the mucopolysaccharide is hyaluronic acid.

27. The method for producing the porous ceramic of claim 26, wherein in the slurry preparing step, aggrecan is incorporated in the slurry.

28. The method for producing the porous ceramic of claim 25, wherein in the slurry preparing step, a binder for binding powders of the powdery aggregate to each other is incorporated in the slurry.

29. The method for producing the porous ceramic of claim 28, wherein the binder is at least one selected from sodium silicate, colloidal silica, alumina sol, lithium silicate, glass frit, natural rubber, synthetic rubber, methylcellulose, carboxymethylcellulose, hydroxymethylcellulose, hydroxyethylcellulose, polyvinyl alcohol, polyethylene, phenol resin, polyacrylate, and sodium polyacrylate.

30. The method for producing the porous ceramic of claim 25, wherein in the slurry preparing step, at least one selected from the following is incorporated in the slurry: a fluidizing agent, a dispersing agent, a slurry hardening agent, an organic monomer and a crosslinking agent for the monomer, a plasticizer, an antifoamer, and a surfactant.

31. The method for producing the porous ceramic of claim 25, wherein in the solid matter forming step, the humidity of the surrounding atmosphere of the slurry is lowered.

32. The method for producing the porous ceramic of claim 25, wherein in the solid matter forming step, the pressure of the surrounding atmosphere of the slurry is lowered.

33. The method for producing the porous ceramic of claim 25, wherein in the solid matter forming step, the slurry is spray-dried, thereby forming the solid matter in a powder or granular form.

34. The method for producing the porous ceramic of claim 25, wherein in the solid matter forming step, a filter is used to decrease the liquid component of the slurry, thereby forming the solid matter.

35. The method for producing the porous ceramic of claim 25, wherein in the firing step, the solid matter is oxidization-fired.

36. The method for producing the porous ceramic of claim 25, wherein in the firing step, the solid matter is reduction-fired.

37. The method for producing the porous ceramic of claim 25, wherein in the firing step, the pressure of the surrounding atmosphere of the solid matter is changed while the temperature thereof is kept constant.

38. The method for producing the porous ceramic of claim 25, wherein in the firing step, the temperature of the surrounding atmosphere of the solid matter is changed while the pressure thereof is kept constant.

39. A porous ceramic produced by firing a solid matter formed by decreasing a liquid component from a slurry containing a powdery aggregate, a bum-out feature material, and a mucopolysaccharide so as to bum up the hydrated crystalline material.

40. The porous ceramic of claim 38, wherein the mucopolysaccharide is hyaluronic acid.

41. The porous ceramic of claim 38, which carries at least one selected from an electrifiable material, a material having an ion exchange group, a material having a hydrophilic functional group, a material having a hydrophobic functional group, a catalyst, an enzyme, a protein, a saccharide, a lipid, and a nucleic acid; a modified product of any one thereof, a composite of plural materials selected therefrom; and other ceramic materials, and glass.

42. The porous ceramic of claim 38, wherein a surface-covering layer is formed.

43. The porous ceramic of claim 38, wherein
the surface thereof is subjected to chemical and/or physical surface treatment.
